# EUROPÄISCHE PATENTANMELDUNG

(11) **EP 4 559 843 A1**
(43) Veröffentlichungstag der Anmeldung: **28.05.2025**
(21) Anmeldenummer: 24000137.0
(22) Anmeldetag: 19.11.2024
(51) Int. Cl.: B65G 43/08, B65G 47/84

(54) **PRÜF- UND SORTIERANLAGE FÜR SCHAFTLASTIGE PRÜFTEILE**

(30) Priorität: 24.11.2023 DE 202023002458 U
(71) Anmelder: GPP Chemnitz Gesellschaft für Prozeßrechnerprogrammierung mbH, 09116 Chemnitz (DE)
(72) Erfinder: Dietel, Ulrich, DE-09116 Chemnitz (DE)
(74) Vertreter: Findeisen Neumann Scheit Partnerschaft mbB

(57) **Zusammenfassung**

Die Erfindung betrifft eine Prüf- und Sortieranlage zur Sortierung und Prüfung schaftlastiger Prüfteile, im Wesentlichen bestehend aus einer Zuführ- und Vereinzelungsvorrichtung, zumindest einer Prüf- oder Messstation sowie einer Abführvorrichtung, wobei ein motorisch angetriebener Transportteller die Prüfteile zu der zumindest einen Prüf- oder Messstation und zum nächsten Prozessschritt bewegt. Aufgabe der Erfindung ist es, eine derartige Prüf- und Sortieranlage vorzuschlagen, bei der der Transportteller so ausgestaltet ist, dass Rüstvorgänge einfach, schnell, sicher und qualitätsgerecht ausgeführt werden können. Diese Aufgabe wird gelöst, indem der Transportteller (6) eine Grundplatte (7) und einen Haltering (8) und einen Stützring (9) aufweist, wobei Haltering (8) und Stützring (9) jeweils aus zumindest zwei Segmenten gebildet werden und wobei der Haltering (8) und/oder der Stützring (9) Prüfteilaufnahmen (10) aufweisen.

## Beschreibung

Die Erfindung betrifft eine Prüf- und Sortieranlage zur Sortierung und Prüfung schaftlastiger Prüfteile, im Wesentlichen bestehend aus einer Zuführ- und Vereinzelungsvorrichtung, zumindest einer Prüf- oder Messstation sowie einer Abführvorrichtung, wobei ein motorisch angetriebener Transportteller die Prüfteile zu der zumindest einen Prüf- oder Messstation und zum nächsten Prozessschritt bewegt.

Prüf- und Sortieranlagen für zumeist als Schüttgut bereitgestellte Prüfteile verfügen üblicherweise über mindestens eine Zuführ- und Vereinzelungsvorrichtung sowie eine oder mehrere Prüfteilträger. Insbesondere schaftlastige Prüfteile, wie beispielsweise Schrauben, Niete oder Stifte, werden üblicherweise zunächst mit Hilfe eines geeigneten Förderers aus einem Vorratsbehälter entnommen und vereinzelt und anschließend lagerichtig in einen Werkstückträger, beispielsweise einen Transportteller oder ein Transportband mit Taschen, eingehängt. Die eingehängten Prüfteile werden nacheinander an zumindest einer Prüfstation im kontinuierlichen Betrieb vorbeigeführt und aufgabenspezifisch geprüft oder vermessen. Alternativ erfolgt die Bewegung der Prüfteile im getakteten Betrieb, wobei jeweils ein Prüfteil in eine Station eingebracht und fixiert sowie aufgabenspezifisch geprüft oder vermessen wird. Die je nach Prüf- beziehungsweise Messergebnis als "gut" (iO) oder "schlecht" (niO) bewerteten Prüfteile werden über entsprechende voneinander getrennte Vorrichtungen aus der Prüf- und Sortieranlage abtransportiert.

Prüf- und Sortiermaschinen für schaftlastige Prüfteile werden oftmals als Rundtischanlagen ausgeführt, wobei sie zumindest einen motorisch angetriebenen Rundtisch in Form eines Transporttellers zur Aufnahme der Prüfteile aufweisen. Durch Drehung des Transporttellers werden die Prüfteile zu einer oder mehreren radial um den Rundtisch angeordneten Prüfbeziehungsweise Messstationen bewegt und so für eine Prüfung oder Vermessung bereitgestellt.

Entsprechende Prüf- und Sortieranlagen sind aus dem Stand der Technik bekannt. So zeigt beispielsweise eine Firmenschrift der Firma GPP Chemnitz mbH unter dem Erzeugnisnamen "profiSORT" eine mit Stahltellern ausgeführte Anlage zur Prüfung schaftlastiger Bauteile. Dabei sind die Stahlteller fest in der Prüf- bzw. Sortieranlage montiert. Auch andere bekannte Lösungsvorschläge weisen ausschließlich fest montierte Transportteller auf, die im Ganzen austauschbar sind.

Je komplexer die einzelnen Prüf- oder Messoperationen sind und je mehr unterschiedliche Prüfungen bzw. Messungen in einer Anlage unterzubringen sind, desto größer ist der Platzbedarf auf und um den Rundtisch und umso enger sind die Prüfeinrichtungen im zur Verfügung stehenden Bauraum angeordnet. Eine Vergrößerung des Rundtischdurchmessers beziehungsweise des Durchmessers des Transporttellers ist nur begrenzt möglich.

In modernen Fertigungsprozessen wird auch für Prüf- und Sortieranlagen eine weitgehend automatisierte Betriebsweise angestrebt, um die ständig steigenden Forderungen nach immer geringeren Fehlerquoten zu erfüllen und gleichzeitig die Personalkosten für die Qualitätssicherung zu reduzieren.

Dabei variieren die Losgrößen, aber auch die Formen und Abmessungen der zu prüfenden beziehungsweise zu vermessenden Prüfteile erheblich. Dadurch sind häufige Rüstvorgänge erforderlich, die nicht nur zeitkritisch hinsichtlich der Produktionsunterbrechung sind, sondern auch ein großes Fehlerpotenzial aufweisen.

Der Wechsel der Transportteller wird bisher manuell durchgeführt und unterliegt somit einem subjektiven Faktor, der primär von der Sorgfalt und Erfahrung des mit dem Wechsel beauftragten Werkers abhängt. Die Transportteller können größenabhängig unterschiedlich schwer sein, so dass für den Werker eine Reproduzierbarkeit bei verschiedenen Baugrößen oder selten notwendigen Wechseln der Transportteller schwierig ist. Somit ist nicht auszuschließen, dass der zu wechselnde Transportteller beim manuellen Wechsel ungenau eingebaut wird oder gegebenenfalls die Einstellungen der Prüfstationen verändert werden. Außerdem erfordert der manuelle Wechsel bei einer hohen Funktionsdichte mit vielen Prüfstationen oder einem sehr beengten Bauraum in der Prüf- und Sortiermaschine ein anspruchsvolles Handling durch den Werker. Dadurch erhöht sich der Zeitaufwand für den Wechsel des Transportrings, und die Effektivität des gesamten Prozesses wird vermindert. Für große Prüfteile werden die Transportteller im Umfang größer und damit auch schwerer in der Handhabung, so dass während des Transporttellerwechsels Beschädigungen an den meist sensiblen Prüfstationen nicht ausgeschlossen sind.

Aufgabe der Erfindung ist es, eine Prüf- und Sortieranlage, im Wesentlichen bestehend aus einer Zuführ- und Vereinzelungsvorrichtung, zumindest einer Prüf- oder Messstation sowie einer Abführvorrichtung, vorzuschlagen, bei der der Transportteller, der die Prüfteile zwischen Zuführeinrichtung, Prüf- beziehungsweise Messstationen und Abführvorrichtung bewegt, so ausgestaltet ist, dass Rüstvorgänge einfach, schnell, sicher und qualitätsgerecht ausgeführt werden können.

Diese Aufgabe wird gelöst, indem der Transportteller eine Grundplatte und einen Haltering und für lange Prüfteile einen Stützring aufweist, wobei Haltering und Stützring jeweils aus zumindest zwei Segmenten gebildet werden und wobei der Haltering und/oder der Stützring Prüfteilaufnahmen aufweisen.

Eine Ausgestaltung sieht vor, dass der Transportteller mindestens zwei Stützringe aufweist, die bezogen auf die Mittellängsachse des Transporttellers parallel übereinander und mit einem Abstand zueinander angeordnet sind. Somit wird insbesondere für besonders lange Prüfteile eine sehr gute Abstützung und Lagefixierung erreicht.

Eine weitere Ausgestaltung sieht vor, dass die Prüfteilaufnahmen als rotationssymmetrisch um die Mittellängsachse des Transporttellers angeordnete Taschen ausgebildet sind. Bei den so genannten Taschen handelt es sich um Aussparungen am Außenrand des Halterings beziehungsweise des Stützrings, die dazu dienen, die schaftlastigen Prüfkörper aufzunehmen und ausreichend sicher lage- und positionsrichtig zu halten. Nach Abschluss aller Mess- und Prüfoperationen müssen die Prüfkörper ebenso einfach wieder aus den Prüfteilaufnahmen herausgelöst werden können, um dann über entsprechende Abführvorrichtungen, sortiert in iO- beziehungsweise niO-Teile, aus der Anlage entnommen zu werden.

Eine weitere Ausgestaltung sieht vor, dass die Grundplatte des Transporttellers eine kreisförmige Außenkontur aufweist. Die kreisförmige Form der Grundplatte bietet sich an, weil daran Segmente des Halterings in beliebiger Teilung befestigt werden können.

Eine weitere Ausgestaltung sieht vor, dass zwischen Haltering und Stützring Abstandshalter angeordnet sind. Während der Haltering dazu dient, die schaftlastigen Prüfteile in entsprechenden Taschen aufzunehmen, dient der Stützring dazu, ein Verschieben oder Verkippen der Prüfteile zu vermeiden. Zwischen Haltering und Stützring sind vorteilhafterweise so viele Abstandshalter, die auch gleichzeitig als Verbindungselemente zwischen Haltering und Stützring bzw. zwischen Halteringsegment und Stützringsegment dienen können, angeordnet, dass die Baugruppe eine für den Anwendungsfall ausreichende Stabilität aufweist.

Eine weitere Ausgestaltung sieht vor, dass die zumindest zwei Segmente des Halterings und des Stützrings als Kreissegmente ausgeführt sind, wobei diese Kreissegmente radial zur Mittellängsachse des Transporttellers angeordnet sind. Dabei können die Segmente des Halterings und die Segmente des Stützrings einzeln demontierbar und montierbar ausgestaltet sein. Durch die Segmentierung von Haltering und Stützring und somit die segmentweise Demontagemöglichkeit ist es einfacher, bei Chargenwechseln oder sonstigen Rüstoperationen den Transportteller an andere Prüfteile beziehungsweise Prüfteilabmessungen anzupassen.

Eine weitere Ausgestaltung sieht vor, dass der Haltering an seinem Innendurchmesser eine Rastkante aufweist, wobei die Form der Rastkante kongruent zur Form der Außenkante der Grundplatte des Transporttellers ausgestaltet ist. Durch diese Ausgestaltung des Transporttellers wird eine formschlüssige Verbindung zwischen Grundplatte und Haltering ermöglicht. Damit wird auch die exakte Positionierung der einzelnen Halteringsegmente bei der Montage unterstützt.

Eine weitere Ausgestaltung sieht vor, dass der Haltering an seinem Innendurchmesser lösbar ausgestaltete Verbindungselemente zur Befestigung des Halterings an der Grundplatte des Transporttellers aufweist. Diese Verbindungselemente erlauben die feste, aber dennoch lösbare Verbindung der Halteringsegmente an der Grundplatte des Transporttellers. Bei den Verbindungselementen kann es sich beispielsweise um Schrauben, Stifte oder Klemmelemente handeln.

Eine Ausgestaltung der erfindungsgemäßen Prüf- und Sortieranlage sieht außerdem vor, dass Haltering und/oder Stützring aus einem Stahlwerkstoff oder einer Nichteisenlegierung oder einem Kunststoff oder einem keramischen Werkstoff oder einem Verbundwerkstoff oder einem Werkstoffverbund bestehen. Üblicherweise wird der Transportteller aus Stahl gefertigt, um die Vorteile dieses Werkstoffs hinsichtlich Bearbeitbarkeit, Maßhaltigkeit, mechanischer und thermischer Belastbarkeit usw. auszunutzen. Es sind aber Anwendungen denkbar, bei denen aus Gründen des Leichtbaus oder anderen Überlegungen alternative Werkstoffe gewählt werden.

Nachfolgend wird ein Ausführungsbeispiel der erfindungsgemäßen Prüf- und Sortieranlage anhand der Zeichnungen erläutert. Dabei zeigen
Fig. 1 die gesamte Prüf- und Sortieranlage in einer Übersichtsdarstellung,
Fig. 2 einen erfindungsgemäßen Transportteller in perspektivischer Ansicht,
Fig. 3 ein Segment eines erfindungsgemäßen Halterings in drei Ansichten,
Fig. 4 ein Segment mit Haltering, Stützring und Abstandshaltern.

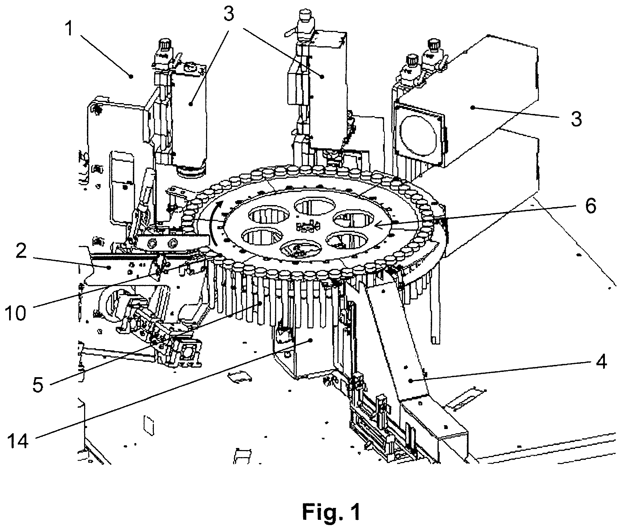

In **Fig. 1** ist ein Beispiel einer erfindungsgemäßen Prüf- und Sortieranlage 1 dargestellt, im Wesentlichen bestehend aus einer Zuführ- und Vereinzelungsvorrichtung 2, mehreren Prüf- oder Messstationen 3 sowie einer Abführvorrichtung 4. Ein Transportteller 6 wird durch einen motorischen Antrieb 14 in eine drehende Bewegung versetzt. Die Prüfteile 5 werden an der Zuführ- und Vereinzelungsvorrichtung 2 jeweils in eine der Prüfteilaufnahmen 10 (hier verdeckt) eingesetzt. Durch Drehen des Transporttellers 6, hier in Uhrzeigerrichtung, werden die Prüfteile 5 zu den einzelnen Prüf- oder Messstationen 3 bewegt und dort geprüft bzw. vermessen. Die Drehbewegung des Transporttellers 6 kann kontinuierlich oder getaktet erfolgen. Nach Abschluss aller Prüf- und/oder Messschritte werden die Prüfteile 5, sortiert nach iO- und niO-Teilen, an einer Abführvorrichtung 4 wieder aus der Prüf- und Sortieranlage ausgeschleust.

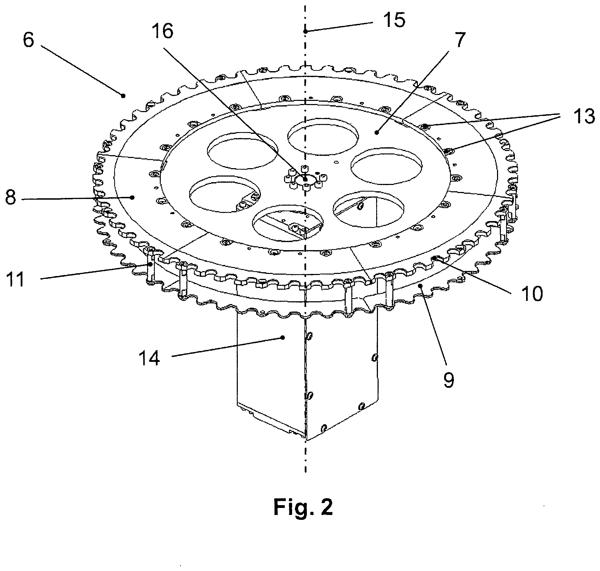

**Fig. 2** zeigt den erfindungsgemäßen Transportteller 6, der in der hier dargestellten Variante aus einer kreisförmigen Grundplatte 7, einem Haltering 8 und einem Stützring 9 besteht. In einer alternativen Ausführung (nicht dargestellt) kann der Transportteller 6 auch zwei oder noch mehr Stützringe 9 aufweisen. Dabei sind diese mehreren Stützringe 9, bezogen auf die Mittellängsachse 15 des Transporttellers 6 parallel übereinander und mit Abstand zueinander angeordnet. Bei der dargestellten Ausführung sind zwischen Haltering 8 und Stützring 9 Abstandshalter 11 angeordnet, die dazu ausgestaltet sind, Haltering 8 und Stützring 9 parallel zueinander zu positionieren und fest miteinander zu verbinden. Am äußeren Umfang des Halterings 8 sind gleichmäßig verteilt Prüfteilaufnahmen 10 (Taschen) angeordnet, in die die schaftlastigen Prüfteile eingesetzt werden können. Der Haltering 8 wird über Verbindungselemente 13 an der Grundplatte 7 des Transporttellers 6 befestigt. Das mittig angeordnete Aufnahmeelement 16 dient dazu, den Transportteller 6 mit dem Antrieb 14 zu verbinden.

Die in **Fig. 2** dargestellte Ausführungsform des erfindungsgemäßen Transporttellers besteht aus sechs gleichgroßen Segmenten, wobei sowohl die Segmente des Halterings 8 als auch die Segmente des Stützrings 9 als Kreissegmente ausgeführt sind, die radial zur Mittellängsachse 15 des Transporttellers 6 angeordnet sind.

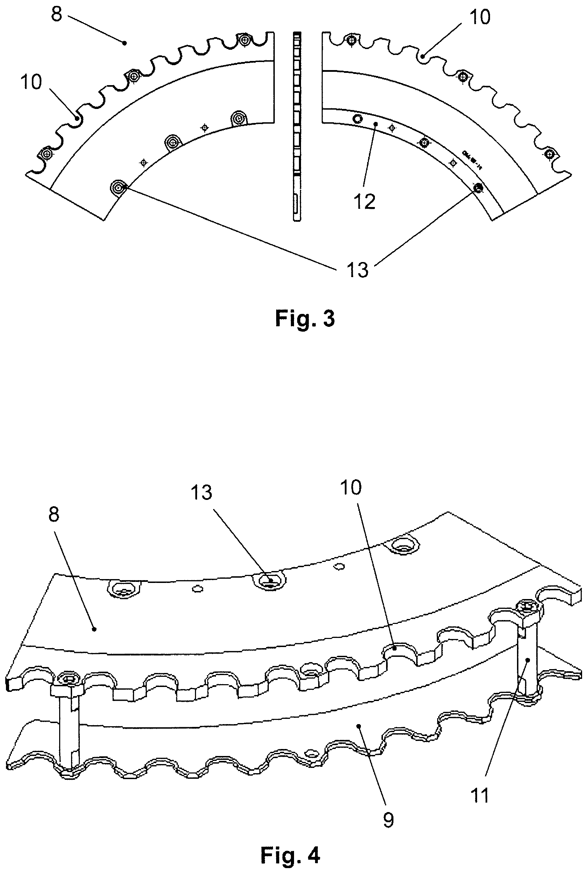

In **Fig. 3** ist ein Segment eines erfindungsgemäßen Halterings 8 mit den Prüfteilaufnahmen 10 in drei Ansichten dargestellt. In der Ansicht von unten (rechts) ist die Rastkante 12 zu erkennen, die zur sicheren Positionierung des Halterings 8 und der Verbindungselemente 13 dient.

**Fig. 4** zeigt noch einmal ein Segment des erfindungsgemäßen Transporttellers 6 mit Haltering 8, Stützring 9, Abstandshaltern 11 und Prüfteilaufnahmen 10 in perspektivischer Ansicht von oben. In dieser Darstellung ist das Segment im demontierten Zustand dargestellt, also so, wie es vom Werker als Baugruppe für den Umrüstvorgang an der Prüf- und Sortieranlage 1 (hier nicht dargestellt) zu bewegen wäre.

### Bezugszeichenliste

- 1: Prüf- und Sortieranlage
- 2: Zuführ- und Vereinzelungsvorrichtung
- 3: Prüf- oder Messstation
- 4: Abführvorrichtung
- 5: Prüfteil
- 6: Transportteller
- 7: Grundplatte
- 8: Haltering; Halteringsegment
- 9: Stützring; Stützringsegment
- 10: Prüfteilaufnahme, Tasche
- 11: Abstandshalter
- 12: Rastkante
- 13: Verbindungselement; Befestigungsbohrung
- 14: Antrieb
- 15: Mittellängsachse des Transporttellers
- 16: Aufnahmeelement

## Patentansprüche

1. Prüf- und Sortieranlage (1) zur Sortierung und Prüfung schaftlastiger Prüfteile (5), im Wesentlichen bestehend aus einer Zuführ- und Vereinzelungsvorrichtung (2), zumindest einer Prüf- oder Messstation (3) sowie einer Abführvorrichtung (4), wobei ein motorisch angetriebener Transportteller (6) die Prüfteile (5) zu der zumindest einen Prüf- oder Messstation (3) und zum nächsten Prozessschritt bewegt, **dadurch gekennzeichnet, dass** der Transportteller (6) eine Grundplatte (7) und einen Haltering (8) und einen Stützring (9) aufweist, wobei Haltering (8) und Stützring (9) jeweils aus zumindest zwei Segmenten gebildet werden und wobei der Haltering (8) und/oder der Stützring (9) Prüfteilaufnahmen (10) aufweisen.

2. Prüf- und Sortieranlage (1) nach Anspruch 1, **dadurch gekennzeichnet,**
**dass** der Transportteller (6) mindestens zwei Stützringe (9) aufweist, die bezogen auf die Mittellängsachse (15) des Transporttellers (6) parallel übereinander und mit einem Abstand zueinander angeordnet sind.

3. Prüf- und Sortieranlage (1) nach Anspruch 1, **dadurch gekennzeichnet,**
**dass** die Prüfteilaufnahmen (10) als rotationssymmetrisch um die Mittellängsachse (15) des Transporttellers (6) angeordnete Taschen ausgebildet sind.

4. Prüf- und Sortieranlage (1) nach Anspruch 1, **dadurch gekennzeichnet,**
**dass** die Grundplatte (7) des Transporttellers (6) eine kreisförmige Außenkontur aufweist.

5. Prüf- und Sortieranlage (1) nach Anspruch 1, **dadurch gekennzeichnet,**
**dass** zwischen Haltering (8) und Stützring (9) Abstandshalter (11) angeordnet sind.

6. Prüf- und Sortieranlage (1) nach Anspruch 1, **dadurch gekennzeichnet,**
**dass** die zumindest zwei Segmente des Halterings (8) und des Stützrings (9) als Kreissegmente ausgeführt sind, wobei diese Kreissegmente radial zur Mittellängsachse (15) des Transporttellers (6) angeordnet sind.

7. Prüf- und Sortieranlage (1) nach Anspruch 5, **dadurch gekennzeichnet,**
**dass** die Segmente des Halterings (8) und die Segmente des Stützrings (9) einzeln demontierbar und montierbar ausgestaltet sind.

8. Prüf- und Sortieranlage (1) nach Anspruch 1, **dadurch gekennzeichnet,**
**dass** der Haltering (8) an seinem Innendurchmesser eine Rastkante (12) aufweist, wobei die Form der Rastkante (12) kongruent zur Form der Außenkante der Grundplatte (7) des Transporttellers (6) ausgestaltet ist.

9. Prüf- und Sortieranlage (1) nach Anspruch 1, **dadurch gekennzeichnet,**
**dass** der Haltering (8) an seinem Innendurchmesser lösbar ausgestaltete Verbindungselemente (13) zur Befestigung des Halterings (8) an der Grundplatte (7) des Transporttellers (6) aufweist.

10. Prüf- und Sortieranlage (1) nach Anspruch 1, **dadurch gekennzeichnet,**
**dass** Haltering (8) und/oder der Stützring (9) aus einem Stahlwerkstoff oder einer Nichteisenlegierung oder einem Kunststoff oder einem keramischen Werkstoff oder einem Verbundwerkstoff oder einem Werkstoffverbund bestehen.
